Europäisches Patentamt

European Patent Office

Office européen des brevets

(11) Publication number: **0 294 619**
**A1**

## EUROPEAN PATENT APPLICATION

(21) Application number: **88107835.6**

(51) Int. Cl.4: **B60S 1/32 , B60S 1/38**

(22) Date of filing: **16.05.88**

(30) Priority: **15.05.87 US 50737**

(43) Date of publication of application:
**14.12.88 Bulletin 88/50**

(84) Designated Contracting States:
**DE ES FR GB IT**

(71) Applicant: **Aldous, Glenn R.**
**5483 Blackrock Road**
**Pocatello, ID 83204(US)**

(72) Inventor: **Aldous, Glenn R**
**5483 Blackrock Road**
**Pocatello, ID 83204(US)**
Inventor: **Terrel, Donald K**
**1204 Sweetwater Drive**
**Reno, Nevada 89509(US)**

(74) Representative: **Patentanwälte Müller-Boré,**
**Deufel, Schön, Hertel, Lewald, Otto**
**Isartorplatz 6**
**D-8000 München 2(DE)**

(54) **Improved windshield wiper blade.**

(57) An improved windshield wiper assembly comprising at least one first wiping means (32), in the form of a rubber wiper blade (36, 38), a second wiping means (42) in the form of a scrubbing or scouring means and a mechanical actuating means (40, 46). The mechanical actuating means causes the scrubbing means (42) to deform outwardly, or toward the windshield, thereby cleaning hard-to-clean materials therefrom. As windshield washer fluid is directed onto the windshield, the windshield wiper is activated in a to-and-fro motion so that the scrubbing means scrubs dried debris from the windshield.

FIG. 1

FIG. 2

EP 0 294 619 A1

# IMPROVED WINDSHIELD WIPER BLADE

## CO-PENDING APPLICATION

This application is a Continuation-In-Part application of my co-pending patent Application Serial No. 050,737, filed 05/15/87.

## BACKGROUND OF THE INVENTION

This invention relates to windshield wipers, and more particularly, to an improved windshield wiper assembly capable of removing dried insect debris from a windshield.

All automobiles and trucks are equipped with windshields or wind screens which require periodic cleaning while the vehicle is under way. Therefore, all such vehicles are likewise equipped with windshield wipers which are adapted to move in a back-and-forth or to-and-fro motion in order to sweep across a major portion of the windshield and remove water therefrom. Conventional windshield wipers are adapted to function in a "squeegee" manner -- that is, the rubber windshield wiper blades scrape across the windshield surface and remove water therefrom. Most automobiles and trucks produced after the early 1970's are also provided with windshield washer fluid delivery systems, wherein cleaning fluid may be delivered to the windshield to aid the windshield wipers in removing dirt or dust therefrom. Windshield wipers have been designed so that they bear against the windshield with a moderate amount of force -- enough to sweep the surface of the windshield clean, but generally not enough to effect any scrubbing action by the wiper blade, since the purpose of the wiper blade is to remove water.

The problem that has existed for some time is that when flying or airborne insects impact against the windshield of a rapidly moving automobile or truck, the body fluids of the insect, and to some degree the exterior body parts, adhere to the windshield and are quickly dried thereon. The resulting windshield smear is, for the most part, impossible to remove by the squeegee action of a conventional windshield wiper blade, even when assisted with windshield washing fluid. A number of modifications to conventional windshield wipers have been proposed in the past to solve this problem, most of which deal with the problem by increasing the amount of pressure applied to the windshield by the windshield wiper. For instance, U.S. Patent No. 3,089,175 proposes to remove the conventional linkage assembly between the removable wiper blade and the blade carrier, and replace it with a plurality of magnets spaced along the length of the wiper blade in order to exert uniform pressure against the windshield to be cleaned. U.S. Patent No. 3,058,141 proposes to increase the pressure between the wiper blade and the windshield as engine speed increases, so as to reduce the problem of wind-lift of the wiper blades. Compressed air is used in order to apply greater pressure to the windshield, and a light spring is used to maintain sufficient contact between the wiper blade and the windshield even when the wiper motor is inoperative.

Likewise, U.S. Patent No. 3,685,086 discloses an attachment for windshield wipers which clamps onto a wiper arm and comprises a plurality of transverse wind-catching ribs progressively increasing in height from a narrow end to a wide end of the unit. The ribs utilize the force of wind impacting against the windshield when the car is moving to increase the pressure of the windshield wiper against the windshield.

Various foreign patents have been issued directed toward the same result, including Japanese patent no. 58-9365 (A) and West German Offenlegungsschrifts 1,505,430 and 1,938,618.

Finally, U.S. Patent No. 3,939,524 discloses a wiper blade assembly wherein a wiper blade is provided with a pair of squeegee lips in an inverted U-shape, with brush material disposed therebetween. A windshield washer fluid cavity is located above the brush material in order to distribute the fluid along the entire length of the wiper blade. This is an attempt to deal with the problem noted above, wherein the brushes assist the wiper blade in removing debris from the windshield.

While all of these devices may provide some benefit over that of a conventional windshield wiper/washer, the problem of removing the dried bug debris still remains -- none of these devices provides the proper "scrubbing" action necessary to remove such material. Therefore, it is an object of the present invention to provide a windshield wiper assembly capable of removing dried bug debris through the proper combination of scrubbing, fluid application and squeegee action.

## BRIEF DESCRIPTION OF THE DRAWINGS

The invention will be further described with reference to the accompanying drawings, in which:

Fig. 1 is a perspective view of a first embodiment of the present invention;

Fig. 2 is a partial sectional view taken along line 2-2 of Fig. 1;

Fig. 3 is a partial side view of a second embodiment of the present invention;

Fig. 4 is a partial side view of third embodiment of the present invention;

Fig. 5a, 5b and 5c are partial side views of a fourth embodiment of the present invention;

Fig. 6 is a partial side view of a fifth embodiment of the present invention;

Fig. 7 is a partial cross-sectional view of a sixth embodiment of the present invention; and

Fig. 8 is a perspective view of a seventh embodiment of the present invention.


## SUMMARY OF THE INVENTION


To accomplish the object of this invention, there is proposed according to one aspect of the invention a windshield wiper assembly comprising a wiper arm affixed to a motor which induces back-and-forth movement of the wiper arm, and an elongate carrier for a wiper blade, the carrier being affixed to the wiper arm. The wiper blade comprises at least one first wiping means, in the nature of a squeegee, which is adapted to remove aqueous fluids from a windshield. The wiper blade further comprises a second wiping means, in the nature of a scrubbing or scouring pad, which is adapted to remove particulates and non-aqueous fluids from a windshield. Such particulates and non-aqueous fluids conventionally comprise dried insect body fluids and body parts, oil and grease, and various other road debris. Mechanical actuating are provided to deform the second wiping means outwardly from a first inoperative position wherein it does not contact the windshield to a second operative position in contact with the windshield wherein the scrubbing may take place.

In a preferred embodiment, the first wiping means is provided as a pair of wiping blades with the second wiping means disposed therebetween. The mechanical actuating means are interconnected to a pressurized system, such as the automobile vacuum system or the windshield washer fluid delivery system, such that when the mechanical actuating means is actuated, the second wiping means is deformed against the windshield to assist in removing insect debris from the windshield. Preferably, windshield washer fluid is distributed throughout the length of the wiper blade, rather than being directed against the windshield from a point near the base of the wiper arm. In one embodiment, the mechanical actuating means is provided as a bladder which may be provided as a single envelope, or it may be provided as an outer envelope within which is contained an inner envelope. In this embodiment, the inner envelope is inter-connected with the windshield washer fluid delivery system, and is provided with perforations such that the fluid travels from the inner envelope into the outer envelope and thence into the second wiping means. Other mechanical actuating means are disclosed herein to effect the movement of the second wiping means against the windshield.


## DETAILED DESCRIPTION OF THE INVENTION


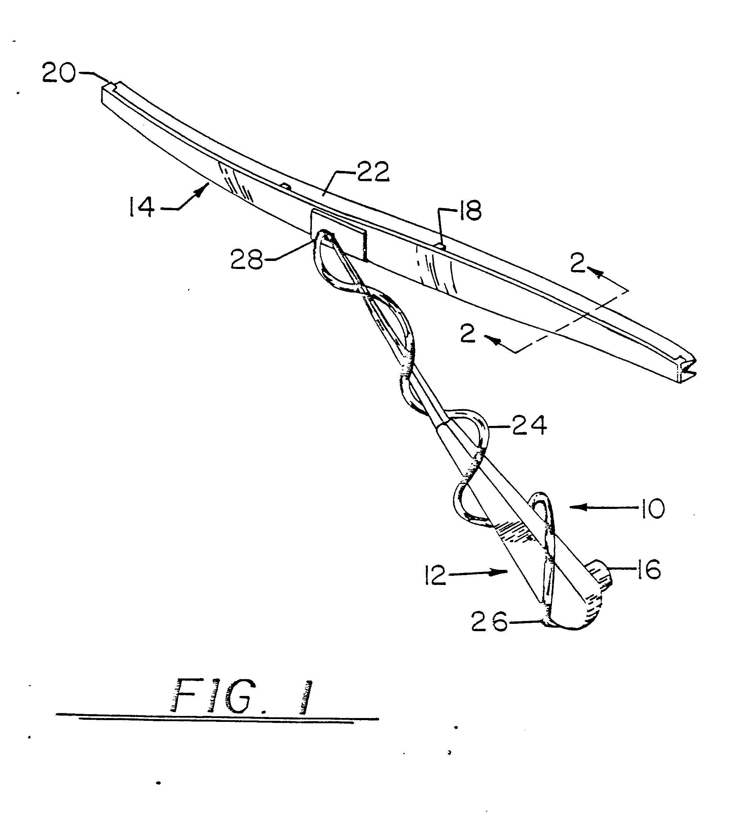

FIG. 1 represents a conventional windshield wiper assembly, generally designated 10, as may be found on an American model automobile. It is to be understood that any reference to a windshield wiper assembly herein is equally applicable, with various modifications obvious to one of ordinary skill in the art, for use on any other moving vehicle with a windshield, such as a semi-trailer tractor, trains, airplanes, etc. The assembly 10 comprises a wiper arm 12 and an elongate carrier 14. The arm 12 is affixed to a post (not shown) as at 16. A motor (also not shown) turns the post and effects the back-and-forth or to-and-fro movement of the wiper assembly across the windshield. The carrier 14 includes ears, 18 and 20, which interact with a removable elongate wiper blade 22 to securely hold the blade in place.

Of course, while the present invention will be described with reference to a removable and replaceable wiper blade 22, this invention is equally susceptible to being provided as an entirely replaceable wiper assembly 10, or a single-unit replaceable carrier 14-blade combination.

A windshield washer fluid delivery conduit 24 is shown in FIG. 1 external of wiper arm 12. The conduit 24 could likewise be provided within wiper arm 12. One end 26 of conduit 24 is affixed to a windshield washer fluid reservoir and the other end 28 is affixed to wiper blade 22. The fluid reservoir provides washer fluid to the wiper assembly under pressure, which in most American cars will be between 5 and 10 psi.

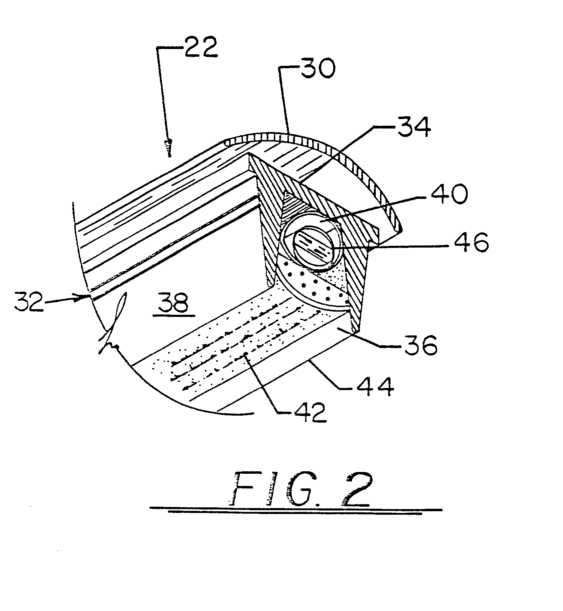

The wiper blade 22 may be seen in more detail in FIG. 2. The wiper blade is provided with a rigid retaining means 30 which interfits with ears 18, 20 of carrier 14 in order to securely hold a removable wiper blade in place. The retaining means may be made of any suitable rigid material, such as aluminum, plastic, etc. A first wiping means, indicated generally at 32, comprises a transverse portion 34 and a pair of lip members 36, 38 affixed thereto. The lip members 36, 38 effect a "squeegee" action when disposed against a windshield to effectively remove aqueous films from the windshield.

As described more fully hereinafter, the present invention comprises a second wiping means in addition to the first wiping means. The invention, in its broadest embodiment, comprises a mechanical actuating means which deforms the second wiping means from its first inoperative position (wherein there is no contact between the second wiping means and the windshield) to a second, operative position in contact with the windshield. It is to be understood that while the first wiping means is represented figuratively herein as a pair of lip or squeegee members, this device will function effectively with a single lip member. However, as explained more fully hereinafter, it is believed that the most effective cleaning of a windshield will occur with a pair of such members.

In a first embodiment of the invention, disposed between the lip members 36, 38 is a bladder member 40 and a second wiping means 42. The bladder 40 is interconnected with conduit 24 such that windshield washer fluid is delivered directly to the bladder 40. When a windshield washer fluid delivery system is activated by a driver, the conduit 24 and bladder 40 are filled with and thereby pressurized by the fluid. Upon being pressurized, the bladder 40 expands to its fully-engorged condition, which is greater than the effective volume of the space defined by the transverse portion 34 and lip members 36, 38 of the first wiping means and the second wiping means 42. Therefore, further expansion of the bladder 40 from its flaccid or inoperative first position to its extended position causes the second wiping means 42 to be "pushed" outwardly beyond the edge 44 of lips 36, 38 and into contact with the windshield.

Of course, the perforations in the bladder must be properly sized so that they do not permit the passage of sufficient windshield washer fluid there through and into the second wiping means 42, to cause deflation of the bladder 40. The combination of the fluid pressure and perforation size must be such that the bladder 40 remains fully extended, thereby maintaining the second wiping means in a deformed condition against the windshield, while at the same time providing sufficient windshield washer fluid to the second wiping means to effect adequate cleaning of the windshield.

As long as the windshield washer fluid delivery system is maintained in an "on" position, the bladder 40 will remain extended and the second wiping means 42 will remain in contact with the windshield. Therefore, when the windshield wiper assembly reciprocates back-and-forth the second wiping means 42 will bear against the windshield and aid in removing dried insect debris therefrom.

While the first wiping means is provided as a conventional rubber wiper blade, the second wiping means 42 is advantageously provided in a form such that it can scrub the windshield surface. For example, loosely non-woven meltblown polyproplene pads, such as are conventionally used to clean household dishes, may be used. Likewise, sponge-like members with imbedded "grit" may perform satisfactorily.

Because cleaning fluid is being applied as the wiper assembly sweeps across the windshield, it is believed that in the interest of safety a wiper blade having a squeegee-action cleaning member on each side of the second wiping means is desirable. Otherwise, a film of windshield washer fluid would be left on the windshield on every other back-and-forth stroke until removed by the return stroke, thereby creating a potential driving hazard. With the wiper blade as shown in the FIG. 2, the fluid is removed as it is applied, resulting in no impaired visibility for the driver.

In an alternative embodiment, the bladder 40 may be provided as an outer envelope surrounding an inner envelope 46 of tubular design. In this embodiment, the inner envelope 46 would be interconnected with conduit 24 at 28. When the fluid delivery system is activated, fluid would flow into the inner envelope 46, thence through perforations therein into the "outer envelope" 40. In either embodiment, the bladder member 40 must contain perforations to permit windshield washer fluid to flow from the bladder 40 into the second wiping means 42.

When the present invention is used in environments requiring heavy-duty cleaning, either because of increase surface area or more frequent use, the wiper blade 22 can be provided in multiples. Likewise, in heavy duty environments, enlargement of the bladder 40 can be increased by assisting with compressed air, as is commonly available in tractor trailer combinations. Such air compression would provide greater bladder expansion, thereby greater deformation of the second wiping means and greater scrubbing action on the windshield.

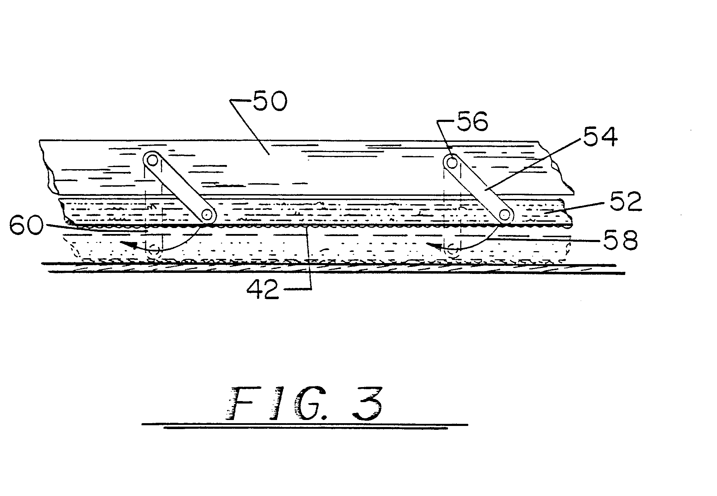

While the bladder 40 may be a preferred embodiment of the present invention, other means are contemplated whereby the second wiping means 42 may be deformed against the windshield. For instance, as shown in Fig. 3, base means 50 may be disposed either adjacent or between one or more lip members 36, 38. Second wiping means 42 is affixed to carrier means 52, which is in turn movably affixed to base means 50. Carrier means 52 is adapted to swing away from its first inoperative position adjacent base means 50 on carrier arm 54, pivoting about point 56. The second wiping means 42 and carrier means 52 pivot away from base means 50 about arc 58 to the second operative position indicated in broken lines at 60.

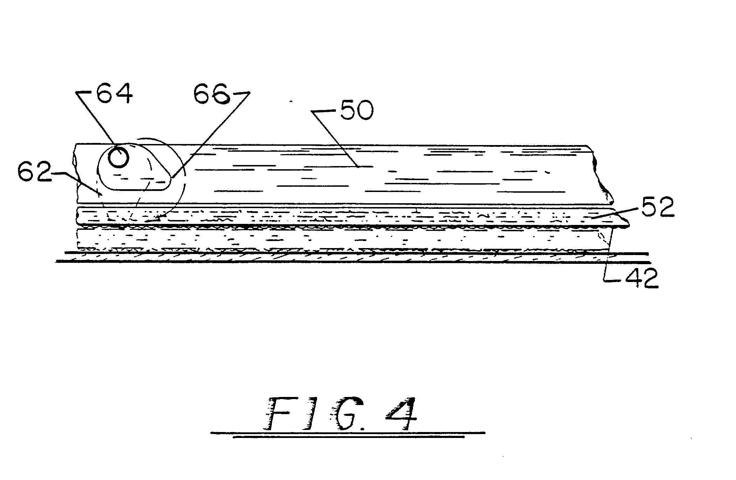

Alternatively, as shown in Fig. 4, the carrier means 52 may be moved from its first inoperative position adjacent the base means 50 to its second operative position (shown in broken lines) adjacent the windshield by the action of one or more cam means 62 which rotate about pivot point 64. The tip 66 of cam means 62 bears against carrier means 52 to deform it to its second operative position.

In the embodiments of Figs. 3 and 4, carrier arms 54 and cam means 62 may be actuated by any means which will be apparent to one of ordinary skill in the art. For instance, pressurized fluid in the windshield washer fluid delivery system may be utilized to actuate a worm gear (not shown) which will maintain the carrier means 52 and second wiping means 42 in the second operative position. The devices may be configured such that the carrier means 52 has a "memory", returning to its first inoperative position when the drive means is inactivated.

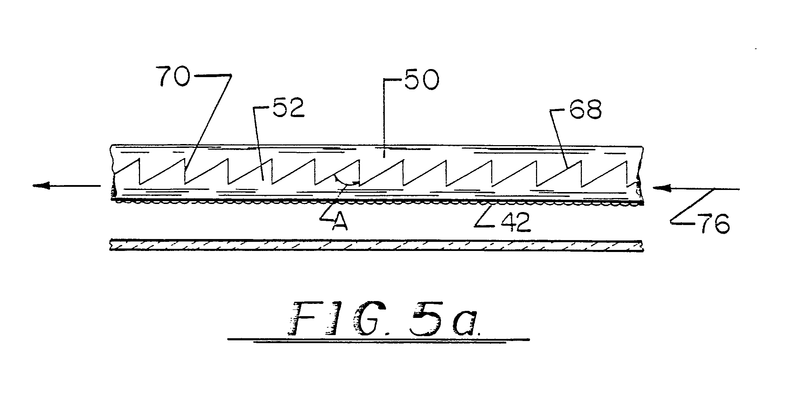

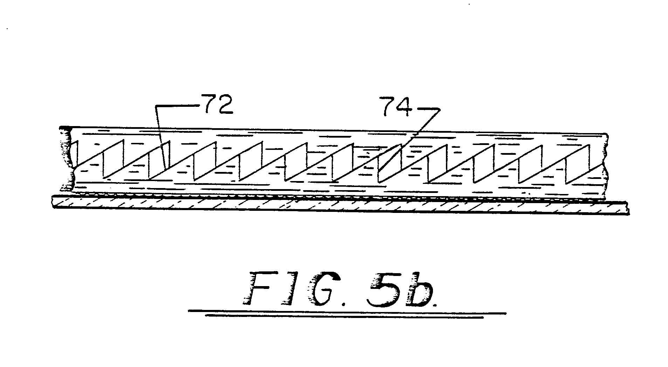

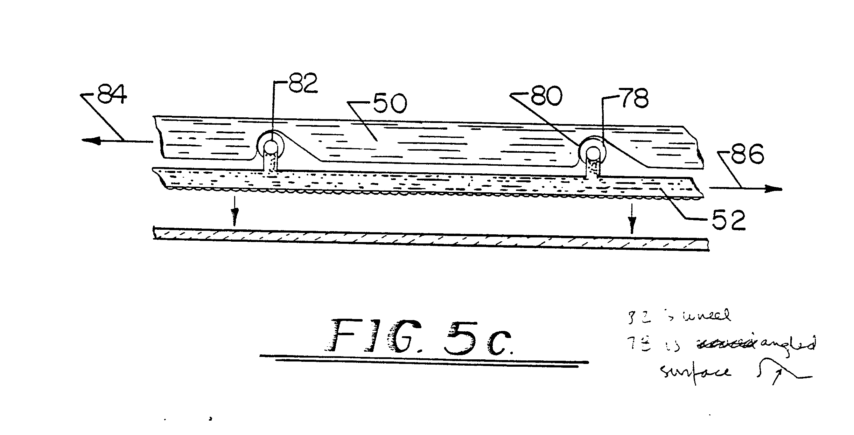

A fourth embodiment, shown more specifically in Fig. 5, uses a sawtooth cam effect to actuate the carrier means 52 and move it from its first inoperative position (Fig. 5a) to its second operative position (Fig. 5b). In this embodiment, the base means 50 is stationary and has a plurality of "sawteeth", each having a sloping forward wall 68 and a rear wall or abutment 70 aligned generally perpendicularly to the upper surface of the base means 50. The walls 68, 70 define an acute angle A therebetween. The carrier means 52 is provided with cooperating sloping forward walls and rear walls 72, 74 respectively which interfit precisely with corresponding walls of base means 50. In the first inoperative position of Fig. 5a, the sawteeth of base means 50 and carrier means 52 interfit precisely. When the actuating means (not shown) is actuated, the carrier means 52 is moved longitudinally (or, in the orientation of a longitudinal axis of carrier means 52) in the direction of arrow 76, such that the sloping forward wall 72 of carrier means 52 slides along sloping forward wall 68 of base means 50, and the carrier means 52 and second wiping means 42 are disposed perpendicular to the direction of travel indicated by arrow 76, and into contact with the windshield. It is to be understood that while the embodiment of Fig. 5 is illustrated with the carrier means 52 being actuated in the direction of travel of arrow 76, it is likewise possible to actuate the base means 50 in a direction of travel opposite to that of arrow 76, and effect the same result, so long as the base means 50 is sufficiently rigid to resist deflection "outwardly" away from the windshield.

The result of the apparatus of Figs. 5a and 5b can be obtained by other means, as for example that shown in Fig. 5c. Therein, the base means 50 is provided with a sloping forward wall 78 and a rear wall 80. The carrier means 52 is provided with rollers 82 which cooperate with the "sawteeth" of base means 50. As either the base means 50 is actuated in the direction of arrow 84 or the carrier means 52 is actuated in the direction of arrow 86, the second wiping means is displaced perpendicularly to the direction of arrows 84, 86, and against the windshield.

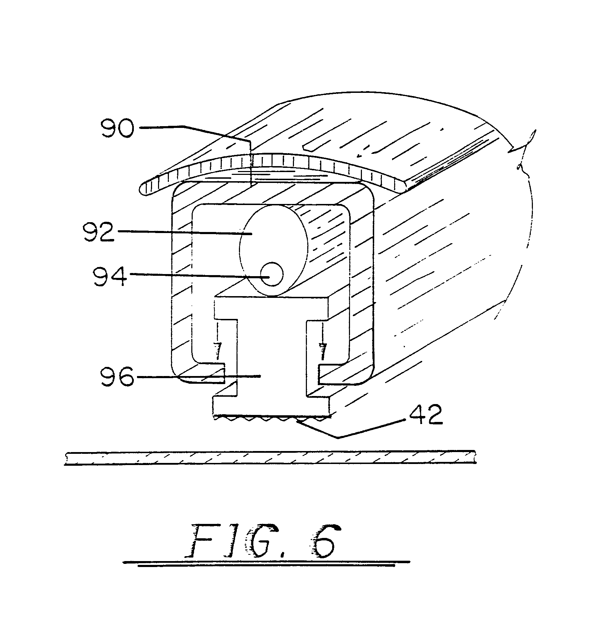

A fifth embodiment of the present invention is disclosed in Fig. 6, wherein a retaining means 90 encloses a cam member 92 which rotates about shaft 94 to displace the second wiping means from a first inoperative position (shown) to a second operative position (not shown) against the windshield. As illustrated, the second wiping means 42 may be carried on carrier member 96 which is retained within retaining means 90. As the cam 92 rotates about shaft 94, it displaces the carrier member 96 "downwardly" and out of the retaining means 90 such that the second wiping means 42 is adjacent the windshield.

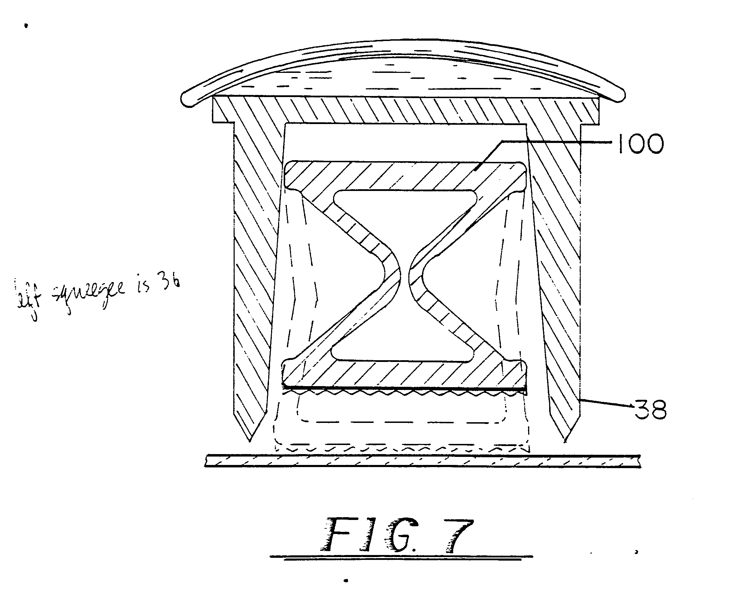

As illustrated in Fig. 7, a carrier member 100 may have a normally-retracted first inoperative position shown in solid lines. Upon actuation of the windshield washer fluid delivery system, the carrier member 100 is filled with fluid, distending it and placing the second wiping means adjacent the windshield. However, it is to be understood that while the preferred embodiment of the present invention utilizes the pressure of the windshield washer fluid delivery system to activate each of the devices disclosed above, numerous other means are available to one of ordinary skill in the art to effect such actuation, such as the automobile vacuum system present on all automobiles and electric motors. For instance, using the apparatus of Fig. 7, when utilizing the automobile vacuum system, a deformable carrier member 100 may be disposed adjacent or between lips 36, 38 such that when a vacuum is applied to carrier member 100, it is in its first inoperative position shown in solid lines in Fig. 7. If, upon actuation of the windshield wipers or windshield washer fluid delivery system, the vacuum is removed from the carrier member 100, it will automatically deflect into an expanded second operative position against the windshield (shown in broken lines in Fig. 7). In this embodiment, the carrier member 100 is provided with an elastic memory in a normally expanded position which is deformed by actuation of the vacuum to its first inoperative position shown in solid lines in Fig. 7.

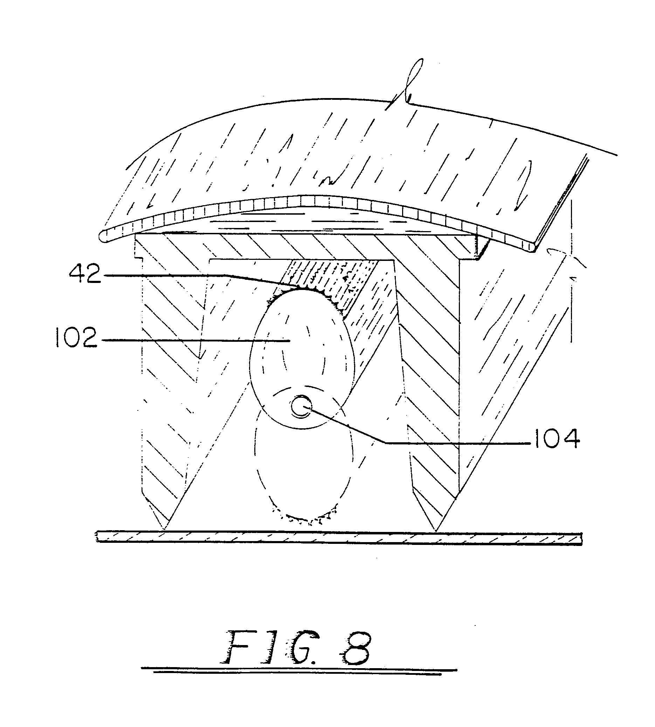

The second wiping means need not be disposed on carrier means as described above, but may be a unitary mechanical device, such as the cam member 102 shown in Fig. 8. The cam member 102 is provided with second wiping means 42 on that portion farthest from pivot point 104. The cam member 102 may simply be pivoted from its first inoperative position (solid lines) to its second operative position (broken lines) without the need for additional carrier means.

Windshield washer fluid is advantageously provided to the windshield either through conventional hood-mounted spray sources, or along the length of the wiper blade by any conventional means. For instance, the fluid may be applied through a bladder as disclosed in my co-pending patent application Serial No. 070,324, or may be applied to the windshield from one or more points on the wiper blade.

While the invention has been described thus far in relation to a windshield wiper, it is readily apparent that this invention is equally applicable to other embodiments where it is useful to periodically apply scrubbing means for cleaning planar surfaces. For instance, the invention may be used to clean windows of offices, homes, etc., to clean floors, work places, etc. It should also be apparent that the various mechanisms disclosed herein to actuate the scrubbing means may be useful to actuate the means in environments other than for cleaning planar surfaces, and the present invention should be considered useful in such environments.

Various modifications and adjustments may be made in the invention disclosed herein without departing from the spirit and scope of the invention. Therefore, the scope of this invention is to be determined solely by the claims appended hereto.

## Claims

1. An improved windshield wiper assembly comprising:

a. a wiper arm affixed to motor means such that the wiper arm is directed in a back-and-forth motion across a windshield;

b. an elongate carrier for a wiper blade affixed to said wiper arm; and

c. an elongate wiper blade further comprising:

(1) at least one first wiping means adapted to remove aqueous fluids from a windshield;

(2) a second wiping means adapted to remove particulates and non-aqueous fluids from a windshield by abrasion; and

(3) mechanical actuating means adapted to deform the second wiping means from a first inoperative position not in contact with said windshield, to a second operative position in contact with said windshield.

2. The assembly as recited in Claim 1, wherein said wiper blade comprises a pair of spaced apart first wiping means.

3. The assembly as recited in Claim 1, wherein said second wiping means comprises a deformable abrasive pad.

4. The assembly as recited in Claim 1, wherein said mechanical actuating means comprises a cam member adapted to rotate eccentrically about a pivot point.

5. The assembly as recited in Claim 4, wherein said cam member is provided with said second wiping means, such that said cam member rotates the second wiping means from the first inoperative position to the second operative position.

6. The assembly as recited in Claim 4, wherein said cam member moves carrier means from a first inoperative position to a second operative position, and said carrier means is provided with said second wiping means.

7. The assembly as recited in Claim 1, wherein said mechanical actuating means comprises elongate carrier means having a longitudinal axis and movably affixed to elongate base means having a longitudinal axis.

8. The assembly recited in Claim 7, wherein the elongate carrier means is provided with the second wiping means, such that the elongate carrier means and the second wiping means are deformed from the first inoperative position to the second operative position.

9. The assembly as recited in Claim 8, wherein a force applied along the longitudinal axis of either the base means or the carrier means induces relative movement therebetween perpendicular to the longitudinal axis, such that the carrier means and the second wiping means are disposed against the windshield.

10. An improved windshield wiper assembly comprising a wiper arm, an elongate carrier for a removable wiper blade, and a windshield washer fluid delivery system for delivery of fluid to said windshield, the improvement in said removable wiper blade comprising:

a. at least one first wiping means adapted to remove aqueous fluids from a windshield;

b. a second wiping means adapted to remove particulates and non-aqueous fluids from a windshield by abrasion; and

c. mechanical actuating means using the pressure of said windshield washer fluid delivery system to deform the second wiping means from a first inoperative position to a second operative position in contact with said windshield.

11. The assembly as recited in Claim 10, wherein said removable wiper blade comprises a pair of first wiping means.

12. The assembly as recited in Claim 11, wherein said second wiping means and said mechanical actuating means are disposed between said pair of first wiping means.

13. The assembly as recited in Claim 10, wherein said mechanical actuating means comprises a cam member adapted to rotate eccentrically about a pivot point.

14. The assembly as recited in Claim 13, wherein said cam member is provided with said second wiping means, such that said cam member rotates the second wiping means from the first inoperative position to the second operative position.

15. The assembly as recited in Claim 13, wherein said cam member moves carrier means from a first inoperative position to a second operative position, and said carrier means is provided with said second wiping means.

16. The assembly as recited in Claim 10, wherein said mechanical actuating means comprises elongate carrier means having a longitudinal axis and movably affixed to elongate base means having a longitudinal axis.

17. The assembly recited in Claim 16, wherein the elongate carrier means is provided with the second wiping means, such that the elongate carrier means and the second wiping means are deformed from the first inoperative position to the second operative position.

18. The assembly as recited in Claim 17, wherein a force applied along the longitudinal axis of either the base means or the carrier means induces relative movement therebetween perpendicular to the longitudinal axis, such that the carrier means and the second wiping means are disposed against the windshield.

19. An improved wiping means comprising a wiping arm, an elongate carrier for a wiping blade, and a fluid delivery system, the improvement comprising:

a. at least one first wiping means adapted to remove aqueous fluids from a surface to be cleaned;

b. a second wiping means adapted to remove particulates and non-aqueous fluids from a surface to be cleaned by abrasion; and

c. mechanical actuating means adapted to deform the second wiping means from a first inoperative position not in contact with said surface to be cleaned, to a second operative position in contact with said surface to be cleaned.

20. The improvement of Claim 19, wherein said first wiping means comprises a squeegie member and said second wiping means comprises a deformable abrasive pad.

FIG. 1

FIG. 2

*FIG. 3*

FIG. 4

70 — 52 50 68

A 42 76

## FIG. 5a.

FIG. 5b.

## FIG. 5c.

82 is wheel
78 is ~~scored~~ angled
surface

FIG. 6

EP 0 294 619 A1

lift squeegee is 36

100

38

*FIG. 7*

42

102

104

FIG. 8

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| X | WO-A-8 001 155 (TRICO-FOLBERTH)<br>* page 4, lines 12-17; figures * | 1,10,19 | B 60 S 1/32<br>B 60 S 1/38 |
| Y |  | 11,12,<br>16-18 |  |
| Y | US-A-3 638 274 (FARVER)<br>* column 5, lines 34-57 * | 1-3,7-9<br>,11,12,<br>16-20 |  |
| Y | US-A-4 567 621 (ALLEY)<br>* column 3, lines 23-40 * | 1-3,7-9<br>,19,20 |  |

**TECHNICAL FIELDS SEARCHED (Int. Cl.4)**

B 60 S 1/00

The present search report has been drawn up for all claims

| Place of search | Date of completion of the search | Examiner |
|---|---|---|
| BERLIN | 23-09-1988 | STANDRING M A |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P0401)